**Europäisches Patentamt**

**European Patent Office**

**Office européen des brevets**

(19)

(11) Veröffentlichungsnummer: **0 156 434**
A2

(12)                    EUROPÄISCHE PATENTANMELDUNG

(21) Anmeldenummer: **85200389.6**

(22) Anmeldetag: **15.03.85**

(51) Int. Cl.⁴: **F 16 C 11/10**
**F 21 V 21/30**

(30) Priorität: **30.03.84 AT 1099/84**

(43) Veröffentlichungstag der Anmeldung:
**02.10.85 Patentblatt 85/40**

(84) Benannte Vertragsstaaten:
**BE CH DE FR GB IT LI NL SE**

(71) Anmelder: **Niox-Metallwarenfabrik Johann Wachter**
**G.m.b.H.**
**Mossbachergasse 10**
**A-1140 Wien(AT)**

(72) Erfinder: **Otto, Alexander, Dipl.-Ing.**
**Saikogasse 6/24/16**
**A-1220 Wien(AT)**

(74) Vertreter: **Kliment, Peter, Dipl.-Ing. Mag.-jur.**
**Singerstrasse 8**
**A-1010 Wien(AT)**

(54) **Drehgelenk.**

(57) Drehgelenk für berstellbare Scheinwerfer, Leuchten u.dgl. mit lediglich zwei Teilen (1,2), von denen einer einen mit federnden Haken (4) versehenen Schnappverbinder (3) aufweist, Dieser Schnappverbinder (3) bzw. dessen Haken (4) hintergreifen beim Zusammenstecken der beiden Teile (1,2) den Rand einer zentralen Bohrung des anderen Teiles (2) und sorgen für den Zusammenhalt der beiden Teile. Zum Verrasten der beiden Teile (1,2) ist der eine Teil (2) mit einer konzentrisch zur Drehachse angeordneten Verzahnung (9) und der andere Teil mit mindestens einer mit Zähnen (8) versehenen Federspange (7) versehen ist, welche Zähne (8) mit der Verzanung (9) in Eingriff bringbar sind.

Fig. 2

Die Erfindung bezieht sich auf ein Drehgelenk für verstellbare Stützen zur Positionierung von Scheinwerfern, Leuchten, Geräten, Stütz- und Haltevorrichtungen od.dgl. bei dem zwei vorzugsweise aus Kunststoff gefertige Teile, welche gegeneinander verdrehbar und mittels einer Rastverzahnung fixierbar sind.

Bisher wurden bei Scheinwerfern, Leuchten, Sende-, Empfangs-, Bedienungs- und Anzeigegeräten, Stütz- und Haltevorrichtungen etc. deren Position oftmals verändert wird und wobei keine besonderen Anforderungen an Positionsgenauigkeit und Positioniervorgang gestellt werden, Gelenkstützen verwendet, deren Funktion auf dem Prinzip der Erzeugung einer hinreichend großen Reibung in den Gelenken basiert, wobei zur Verstellung die Überwindung dieser Reibungskräfte erforderlich ist. Da bei schweren Gegenständen, oder bei Anordnungen, die Erschütterungen ausgesetzt sind, wie z. B. auf Fahrzeugen montierte Gelenkstützen, relativ große Reibungskräfte zur sicheren Positionierung erforderlich sind, werden die Reibflächen der Gelenke solcher Stützen zumeist mittels Schrauben, Nieten oder Ösen aus Metall unter Verwendung von Tellerfedern, Federscheiben, Beilagscheiben, Distanzbüchsen usw. gegeneinandergepreßt, wobei oft auch alle Bauteile der Gelenkstütze aus Metall bestehen.

Diese an sich einfachen Konstruktionen weisen jedoch Nachteile auf. Die Verwendung von Metallteilen stellt Anforderungen an den Korrisionsschutz oder führt zur Verwendung nicht korrodierender, teurer Materialien. Die Montage einer Vielzahl von Einzelteilen ist relativ langwierig und vor allem bei großen Stückzahlen nicht zu vertreten. Schließlich ist auch häufig eine Versorgungsleitung über die Gelenkstütze zu führen, welche oft außenliegend und ungestützt angebracht ist.

Weiters wurde durch die DE-OS 29 18 532 ein Drehgelenk der eingangs erwähnten Art bekannt, bei dem die Drehachse des Gelenkes gegenüber den Längsachsen der durch das Gelenk verbundenen Teile schräg geneigt verläuft und der einen Teil des Gelenkes auf den hohlen Drehzapfen des anderen Teiles aufgeschoben und die Teile mittels einer durch einen die Drehzapfen durchsetzenden Hohlniete abgestützten Spiralfeder gegeneinander gedrückt werden. Dabei sind an den eliptischen Berührungsflächen der beiden Teile Rastverspannungen angeordnet, die durch die Feder in gegenseitigem Eingriff gehalten werden. Bei dieser Lösung ergibt sich ebenfalls der Nachteil einer Vielzahl von Teilen deren Montage insbesondere aufgrund der erforderlichen Hohlniete relativ schwierig und aufwendig ist.

Aufgabe der Erfindung ist es, eine Gelenkstütze zu entwickeln, welche ganz aus Kunststoff, ohne Verwendung von Metallteilen gefertigt werden kann, um Korrosion auszuschalten, die aus so wenig Teilen wie möglich besteht, um den Montageaufwand zeitlich zu minimieren, die es erlaubt, in ihrem Inneren Versorgungsleitungen geschützt durchzuführen, die dabei jedoch eine ausreichend starke Fixierung des daran befestigten Gegenstandes bewirkt. Weitere Ansprüche sind ein Drehwinkel von 360°, Witterungstauglichkeit und ausreichende Abdichtung gegen Wasser und Eis für den Einsatz im freien, so wie eine möglichst einfache Spritzgußform.

Dies wird bei einem Drehgelenk der eingangs angeführten Art erfindungsgemäß dadurch gelöst, daß der eine Teil konzentrisch um die Drehachse angeordnete Schnappverbinder besitzt, die zum Zusammenhalt der beiden Teile mit ihren Haken hinter einen ebenfalls konzentrisch zur Drehachse angeordneten und mit dem anderen Teil verbundenen Flansch greifen, und daß die Zähne der Rastverzahnung an mindestens einer an dem einen Teil angeordneten Federzunge, an deren freiem Ende angeformt sind, welche Zähne in eine konzentrisch um die Drehachse angeordnete, mit dem anderen Teil verbundene Verzahnung eingreifen und hiedurch einer Verdrehung der beiden Teile und gegeneinander Widerstand entgegengesetzten wobei vorzugsweise sowohl Schnappverbinder als auch Federzungen leicht vorgespannt sind.

Bei einer Verdrehung der Teile gegeneinander werden die Federzungen durch eine geeignete Formgebung der Zähne außer Eingriff gedrängt und überspringen die Verzahnung. Weil das Gelenk in Ruhestellung einen relativ niedrigen Spannungszustand aufweist, ist die Konstruktion besonders für eine Ausführung in Kunststoff bei relativ einfacher Entformbarkeit der Gelenksteile geeignet.

Die Erfindung wird nun näher anhand der Zeichnungen beschrieben. In den Zeichnungen zeigen:

>Figur 1 eine Ansicht eines Scheinwerfers, welcher über zwei Drehgelenke an einer Stütze befestigt ist,
>Figur 2 eine Schnittansicht durch ein erfindungsgemäßes Gelenk und
>Figur 3 eine Schnittansicht längs der Linie III-III in Figur 2.

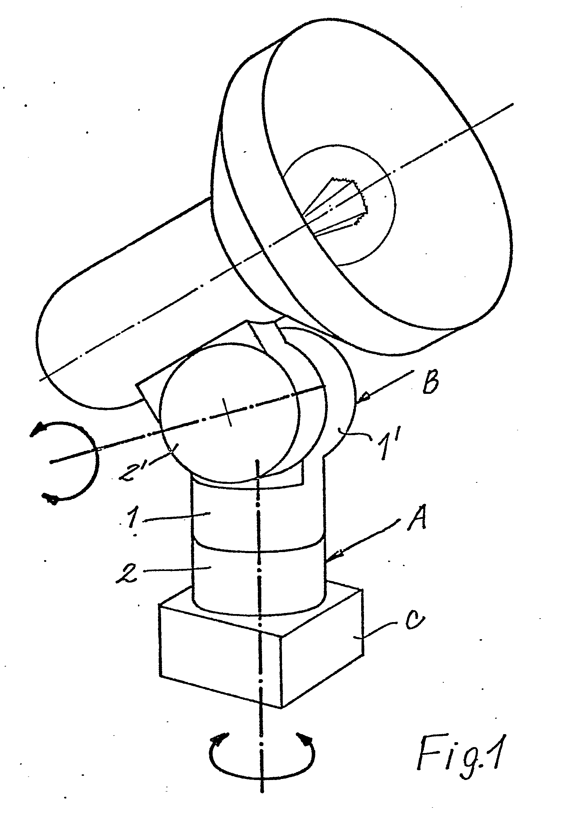

In Figur 1 ist ein Scheinwerfer D über zwei Drehgelenke A,B an einem Basiskörper C befestigt. Jedes Drehgelenk A,B besteht aus zwei Teilen 1,2 bzw. 1',2'.

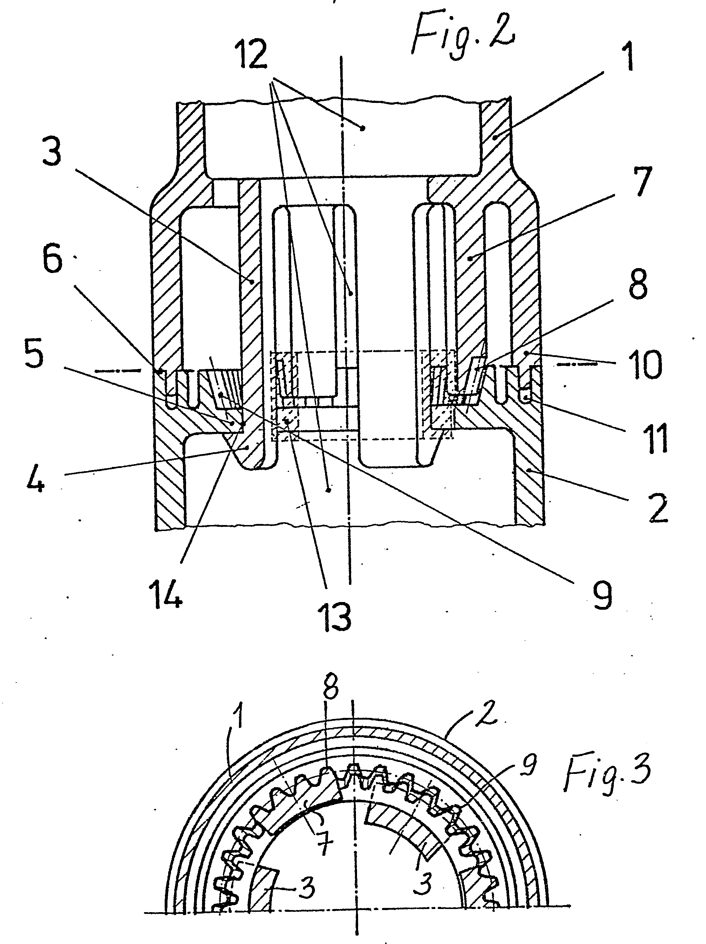

Wie aus Figur 2 erkennbar, ist Teil 1 und Teil 2 um die Mittellinie, welche die Drehachse darstellt, drehbar. Am Teil 1 angeformt sind Schnappverbinder 3, die bei der Montage mit ihren Haken 4 hinter einem Flansch 5 einrasten, der Bestandteil des Teiles 2 ist. Der Teil 1 stützt sich längs des Umfanges 6 auf den Teil 2 ab. Weiters sind am Teil 1 Federzungen 7, die an ihrem Ende eingeformte Zähne 8 haben, ausgebildet, welche in die umlaufende, mit dem Teil 2 verbundene Verzahnung 9 eingreift. Schnappverbinder 3 und Federzungen 7 sind durch ein mit dem Teil 1 mitgespritztes, geschlossenes Gehäuse 10 geschützt. Die Berührungsfläche 6 der beiden Teile 1 und 2 ist als Labyrinthdichtung 11 ausgebildet, diese dient zugleich als Zentrierung. Der Innenraum 12 des Gelenkes ist frei und kann zur Durchführung von Versorgungsleitungen dienen.

Art und Lage der Verzahnung 9 sowie die räumliche Orientierung der Federzungen 7, sowie Zahnform und Anzahl der Zähne können je nach den Anforderungen des Drehwiderstandes, des Abstandes zweier
nachbarter Positionen, sowie der Formgebung des Gelenkes angepaßt
werden. Hier dargestellt ist eine kegelige Innenverzahnung, die
beim Zusammenfügen der Teile 1 und 2 das Eingreifen der sich hierin axialer Richtung erstreckenden Federzungen 7 erleichtert. Zähne
8 und Verzahnung 9 sind so ausgebildet, daß bei einer Verdrehung
die Zähne 8 durch die Schräge der Zahnflanken außer Eingriff gedrängt werden, eine der Verdrehung entsprechende Anzahl von Zähnen
überspringen und anschließend wieder einrasten. Hiezu ist eine so
große Verdrehkraft notwendig; daß die aus der Zahngeometrie nach
den Gesetzen der Mechanik bestimmbaren Abdrängkräfte die Federkraft
der Federzungen 7 überwinden können. Je nach der Zahngeometrie ergibt sich bei sonst unveränderten Abmessungen ein leichtes oder
schwerer verdrehbares Gelenk.

Ebenso läßt sich durch eine geeignete Verzahnungsgeometrie, z. B.
Zähne mit rechteckigem Profil bewirken, daß keine Abdrängkräfte
entstehen. Das Gelenk kann dann nur verdreht werden, wenn die Federzungen 7 durch äußere Kräfte, beispielsweise durch Fingerdruck,
außer Eingriff gebracht werden.

Es ist durch eine geeignete Verschiebung der Teilung der Zähne 8
möglich, zu bewirken, daß die Federzungen 7 abwechselnd einrasten.
Hiedurch ergeben sich bei Verdrehung um einen Zahn mehrere Raststellungen und somit eine feinere Positionierung.

Abweichend von der nur beispielhaften Darstellung können selbstverständlich die Federzungen 7 auch mit dem Teil 2 mitgeformt und die
Verzahnung 9 mit dem Teil 1 verbunden sein.

Es ist auch möglich, die Federzungen 7 starr auszubilden und dafür
die Verzahnung 9 elastisch nachgiebig zu gestalten. Das kann beispielsweise erreicht werden, wenn sich die Verzahnung 9 am freien
Ende eines dünnwandigen höheren Zylinders befindet.

Es können auch Schnappverbinder 3 und Federzungen 7 baulich vereint
werden. Die Schnappverbinder haben dann vorzugsweise in ihren Hohlkehlen 14 Zähne angeformt, die in eine am Umfang des Flansches 5 angebrachte Verzahnung eingreifen. Die Höhe der Zähne ist dann so bemessen, daß die Haken 4 bei der größten Auslenkung noch hinter den Flansch 5 greifen.

Es ist weiters möglich, daß die Schnappverbinder 9 von außen über einen Flansch 5 greifen, sodaß sich der Flansch innerhalb der Schnappverbinder befindet.

Das Gehäuse 10 kann auch am Teil 2 angebracht sein.

Wird in die Labyrinthdichtung 11 ein Dichtring eingelegt, dann können direkt flüssige oder gasförmige Medien durch das Glenk geleitet werden.

Es kann auch ein ringförmiger, fester Körper 13 in das Gelenk eingeschoben werden, welcher an den Federzungen 7 anliegt. Somit wird ein Auslenken derselben verhindert und das Gelenk blockiert. Es kann aber auch ein ringförmiger, elastischer Körper 13 eingeschoben werden, der vorzugsweise an den Federzungen 7 anliegt und beim Auslenken derselben deformiert wird, wodurch die zur Verdrehung des Gelenkes erforderliche Kraft steigt.

Es ist auch möglich, die Federzungen 7 durch einen oder mehrere starre Bauteile, die im selben Teil gelagert sind, zu ersetzen, deren Zähne 8 mittels eigener Federn in die Verzahnung 9 gedrückt werden.

Schließlich kann auch ein Servoantrieb vorgesehen sein, der in die Verzahnung 9 eingreift und im anderen Gelenksteil gelagert ist, mit dessen Hilfe eine ferngesteuerte Verstellung des Gelenkes möglich ist. Der Servoantrieb kann nachgiebig gelagert sein, sodaß er bei einer Funktionsstörung und Verdrehung von Hand aus durch die Abdrängkräfte in der Verzahnung außer Eingriff gedrängt wird.

## Patentansprüche

1. Drehgelenk für verstellbare Stützen zur Positionierung von
Scheinwerfern, Leuchten, Geräten, Stütz- und Haltevorrichtungen
od.dgl., bei dem zwei vorzugsweise aus Kunststoff gefertigte
Teile, welche gegeneinander verdrehbar und mittels einer Rastverzahnung fixierbar sind,
dadurch gekennzeichnet,
daß der eine Teil (1) konzentrisch um die Drehachse angeordnete
Schnappverbinder (3) besitzt, die zum Zusammenhalt der beiden
Teile (1,2) mit ihren Haken (4) hinter einen ebenfalls konzentrisch zur Drehachse angeordneten und mit dem anderen Teil (2)
verbundenen Flansch (5) greifen, und daß die Zähne (8) der
Rastverzahnung an mindestens einer an dem einen Teil (1) angeordneten Federzunge (7), an deren freiem Ende angeformt sind,
welche Zähne (8) in eine konzentrisch um die Drehachse angeordnete, mit dem anderen Teil (2) verbundene Verzahnung (9)
eingreifen und hiedurch einer Verdrehung der beiden Teile (1)
und (2) gegeneinander Widerstand entgegensetzen, wobei vorzugsweise sowohl Schnappverbinder (3) als auch Federzungen (7)
leicht vorgespannt sind.

2. Gelenk nach Anspruch 1,
dadurch gekennzeichnet,
daß Schnappverbinder (3) und Federzungen (7) von einem mitgeformten, geschlossenen Gehäuse (10) umgeben sind.

3. Gelenk nach Anspruch 1 oder 2, bei dem die Berührungsfläche der
beiden Teile als Labyrinthdichtung ausgebildet sind und zugleich als Zentrierung dienen,
dadurch gekennzeichnet,
daß die Berührungsfläche (6) radial außerhalb der Verzahnung
(9) liegt.

5. Gelenk nach einem der Ansprüche 1 bis 4,
dadurch gekennzeichnet,

daß die Zähne (8) der Federzungen (7) und die Verzahnung (9) geometrisch so ausgeführt sind, daß bei einer Relativverdrehung der
Teile (1) und (2) die Zähne (8) durch schräge Zahnflanken außer
Eingriff gedrängt werden, eine der Verdrehung entsprechende Anzahl von Zähnen überspringen und anschließend wieder einrasten.

6. Gelenk nach einem der Ansprüche 1 bis 4,
   dadurch gekennzeichnet,
   daß die Zähne (8) der Federzungen (7) und die Verzahnung (9)
   geometrisch so ausgeführt sind, daß die Zähne (8) nicht aus der
   Verzahnung (9) gedrängt werden können und daß eine Verdrehung
   des Gelenkes nur möglich ist, wenn die Federzungen (7) durch
   eine von außen eingreifende, eine radial gerichtete Komponete
   aufweisende Kraft, insbesondere Fingerdruck, außer Eingriff gebracht werden.

7. Gelenk nach einem der Ansprüche 1 bis 6,
   dadurch gekennzeichnet,
   daß nicht alle Federzungen (7) gleichzeitig durch verschobene
   Teilung der Zähne (8) in die Verzahnung (9) einrasten.

8. Gelenk nach einem oder mehreren Ansprüchen 1 bis 7,
   dadurch gekennzeichnet,
   daß der andere Teil (2) die Federzungen (7) aufweist und die
   Verzahnung (9) an dem einen Teil (1) angebracht ist.

9. Gelenk nach einem der Ansprüche 1 bis 8,
   dadurch gekennzeichnet,
   daß die Federzungen (7) starr und dafür die Verzahnung (9)
   elastisch nachgiebig ausgebildet ist.

10. Gelenk nach einem der Ansprüche 1 bis 7,
    dadurch gekennzeichnet,
    daß Schnappverbinder (3) und Federzungen (7) baulich vereint
    sind, daß die Schnappverbinder (3) vorzugsweise in den Kehlen
    (14) Zähne angeformt haben, die in eine am Flansch (5) angebrachte Verzahnung eingreifen, wobei die radiale Auslenkung der
    als Federzungen fungierenden Schnappverbinder (3) so bemessen ist, daß ihre Haken (4) in ausgelenkter Stellung noch ausreichend weit hinter den Flansch (5) greifen.

11. Gelenk nach einem der Ansprüche 1 bis 10,
    dadurch gekennzeichnet,
    daß durch Einschieben eines festen, ringförmigen, an den Federzungen (7) anliegenden Körpers (13) die Auslenkung der Federzungen (7) verhindert und das Gelenk blockiert wird.

12. Gelenk nach einem der Ansprüch 1 bis 10,
    dadurch gekennzeichnet,
    daß durch Einschieben eines elastischen, ringförmigen, vorzugsweise an den Federzungen (7) anliegenden Körpers (13) die zur Auslenkung erforderliche Kraft erhöht wird.

13. Gelenk nach einem der Ansprüche 1 bis 12,
    dadurch gekennzeichnet,
    daß die Federzungen (7) durch einen oder mehrere im selben Gelenksteil gelagerte Bauteile mit angeformten Zähnen die durch eigene Federn gegen die Verzahnung (9) gedrückt werden, ersetzt sind.

14. Gelenk nach einem der Ansprüche 1 bis 13,
    dadurch gekennzeichnet,
    daß in die Verzahnung (9) ein Servomotor eingreift, der im anderen Gelenksteil befestigt ist.

B

2'

1'

1

A

2

c

Fig.1

Fig. 2

Fig. 3